# EUROPÄISCHE PATENTSCHRIFT

(11) **EP 0 317 817 B1**
(45) Veröffentlichungstag und Bekanntmachung des Hinweises auf die Patenterteilung: **01.06.1994**
(21) Anmeldenummer: 88118532.6
(22) Anmeldetag: 07.11.1988
(51) Int. Cl.: B29C 49/64, B29B 13/02, B29C 49/76

(54) **Verfahren zum Herstellen eines blasgeformten Behälters aus einem thermoplastischen Polyester, insbesondere PET**
Method of making a blow-moulded container from a thermoplastic polyester, especially PET
Procédé de fabrication d'un récipient par soufflage en polyester thermoplastique, en particulier en PET

(30) Priorität: 27.11.1987 DE 3740343
(43) Veröffentlichungstag der Anmeldung: 31.05.1989
(73) Patentinhaber: KRUPP CORPOPLAST MASCHINENBAU GMBH, 22123 Hamburg (DE)
(72) Erfinder: Horwege, Claus, D-2000 Hamburg 76 (DE); Reymann, Wolfgang, Ing. (grad.), D-2000 Hamburg 67 (DE)
(74) Vertreter: Klickow, Hans-Henning

(56) Entgegenhaltungen:
- PATENT ABSTRACTS OF JAPAN vol. 7, no. 221 (M-246)(1366) 30. September 1983& JP-A-58 114 922 (NIPPON ESTER K.K. ) 8. Juli 1983
- PATENT ABSTRACTS OF JAPAN vol. 7, no. 275 (M-261)(1420) 8. Dezember 1983& JP-A-58 153 618 (TOUYOU SEIKAN K.K.) 12. September 1983
- PATENT ABSTRACTS OF JAPAN vol. 7, no. 215 (M-244)(1360) 22. September 1983& JP-A-58 110 221 (NIPPON ESTER K.K. ) 30. Juni 1983
- PATENT ABSTRACTS OF JAPAN vol. 8, no. 73 (M-287)(1510) 5. April 1984& JP-A-58 220 710 (NIPPON ESTER K.K ) 22. Dezember 1983
- KUNSTSTOFFE. Bd. 77, Nr. 7, 1. Juli 1987, MUNCHEN DE Seiten 669 - 672; K.D.NIESSEN ET AL.: 'Herstellen von Mehrschichtflaschen aus Rohrabschnitten'

## Beschreibung

Die Erfindung betrifft ein Verfahren zum Herstellen eines blasgeformten Behälters aus einem thermoplastischen Polyester, insbesondere PET, mit einem zum Aufsetzen eines Verschlusses dienenden, thermofixierten Mündungsabschnitt mit einer Außenprofilierung, der aus dem oberen Ende eines rohrförmigen Vorformlings geformt wird und bei dem das Ende des Vorformlings kristallisiert und dann der Mündungsabschnitt angeformt wird.

Die Erfindung betrifft darüber hinaus einen Vorformling zur Herstellung eines blasgeformten Behälters aus einem thermoplastischen Polyester, insbesondere PET, mit einem zum Aufsetzen eines Verschlusses dienenden, thermofixierten Mündungsabschnitt, der eine Außenprofilierung aufweist, und bei dem die Außenprofilierung des Mündungsabschnittes nach einer Kristallisation geformt ist.

Nach dem Stand der Technik wird zum Blasformen von Behältern von einem Vorformling ausgegangen, der extrudiert wird oder spritzgegossen ist. Der zum Blasformen dienende Vorformling weist einen geschlossenen Boden sowie ein zu einem Mündungsabschnitt umgeformtes Ende auf. Der Mündungsabschnitt dient zum Aufsetzen eines Verschlusses und ist in der Regel mit einem Gewinde versehen. Es kann aber auch eine ringförmige Wulst zum Aufsetzen eines Kronenverschlusses angeformt sein. Für eine höhere Festigkeit und verbesserte Gassperreigenschaften des Behälters ist es bekannt, beim Blasformen eine biaxiale Orientierung durchzuführen. Zur weiteren Verbesserung dieser Eigenschaften sowie zur Steigerung der Hitzebeständigkeit können die Behälter nach der biaxialen Orientierung noch thermofixiert oder kristallisiert werden. Dies ist eine Wärmebehandlung bei einer den Orientierungstemperaturbereich übersteigenden Temperatur. Dabei wird der Mündungsbereich des Behälters nicht thermofixiert.

Um aber auch dem Mündungsbereich die verbesserten Eigenschaften zu verleihen, ist es beispielsweise aus der FR-A-2 429 660 und der US-PS 4 589 559 bekannt, auch den Mündungsbereich zu thermofixieren. Dabei wird vor oder nach dem Blasformen des Behälters der mit einem Gewinde versehene Mündungsabschnitt des Behälters von einer Wärmequelle auf die zum Kristallisieren nötige Temperatur erwärmt und thermofixiert.

Aus den PATENT ABSTRACTS OF JAPAN, vol. 7, no. 221 (M-246) (1366) 30. September 1983 & JP-A-58 114 922 (NIPPON ESTER K.K.) 8. Juli 1983, ist es bekannt, einen rohrförmigen Abschnitt aus einem extrudierten Rohr zu fertigen und mindestens ein Ende dieses rohrförmigen Abschnittes zu kristallisieren. Anschließend wird ein unteres Ende des Rohres zur Ausbildung eines Bodens kuppenförmig verschlossen. Danach wird der gegenüberliegende offene Bereich mit Hilfe einer Vorheizung ausreichend für eine thermoplastische Verformung temperiert und in eine Außenform eingesetzt. Danach erfolgt mit Hilfe eines in den Mündungsabschnitt eingeführten Dornes eine radiale Materialverdrängung zur Ausbildung einer Außenprofilierung des Mündungsbereiches. Durch die Einführbewegung sowie die Zurückziehbewegung des Dornes wird die innenliegende Begrenzung des Mündungsbereiches glattflächig geformt.

In den PATENT ABSTRACTS OF JAPAN, vol. 7, no. 275 (M-261) (1420) 8. Dezember 1983 & JP-A-58 153 618 (TOUYOU SESIKAN K.K.) 12. September 1983, wird ein Verfahren zur Erzeugung eines kristallisierten Mündungsbereiches für einen Vorformling angegeben. Der Vorformling wird zunächst im Mündungsbereich kristallisiert und anschließend wird der Mündungsbereich von einer Außenform umschlossen, die eine Profilierung zur Ausbildung von Gewindegängen sowie zur Ausbildung eines Stützringes aufweist. Anschließend wird ein Dorn in den Vorformling eingeführt, der das thermoplastische Material in die Gewindegänge hineindrückt. Auch hier entsteht somit eine glatt ausgebildete innere Begrenzung des Mündungsbereiches.

Aus den PATENT ABSTRACTS OF JAPAN vol. 7, no. 215 (M-244) (1360) 22. September 1983 & JP-A-58 110 221 (NIPPON ESTER K.K.) ist es bekannt, einen Vorformling aus einem extrudierten Rohr herzustellen, das im Bereich seines einen Endes zur Ausformung eines Bodens geschlossen wird. Anschließend wird das offene Ende des Vorformlinges mit Hilfe einer Vorheizeinrichtung theromplastisch erweicht und in eine Außenform eingeschlossen. Die Außenform ist mit einer Profilierung zur Ausbildung einer Außenprofilierung des Mündungsbereiches versehen. Das thermoplastische Material des Vorformlings wird von einem in den Mündungsbereich eingeführten Dorn in die Profilierung der Außenform gedrückt. Gleichzeitig mit der Formung des Mündungsbereiches erfolgt eine Beheizung der Außenform, so daß nach einem ausreichend innigen Kontakt des in die Profilierung der Außenform verdrängten Materials eine Kristallisation durch Wärmeeinwirkung erfolgen kann.

Eine Vorrichtung zur Kristallisierung eines Endes eines rohrförmigen Vorformlings wird in den PATENT ABSTRACTS OF JAPAN vol. 8, no. 73 (M-287) (1510) 5. April 1984 & JP-A-58 220 710 (NIPPON ESTER K.K) 22. Dezember 1983, beschrieben. Der Vorformling wird hierzu in eine hülsenförmige Halterung eingeschoben, aus der der Vorformling mit dem zu kristallisierenden Bereich herausragt. Anschließend wird die Hülse in den Bereich einer Heizeinrichtung eingeführt. Hier erfolgt eine Wärmebeaufschlagung des aus der Hülse herausragenden Endes des Vorformlinges, das aufgrund der zugeführten Wärmeenergie kristallisiert. Durch die Eintauchtiefe des Vorformlinges in die Hülse wird die Länge des aus der Hülse herausragenden Bereiches und somit die Ausdehnung des kristallisierten Bereiches vorgegeben.

Eine grundsätzliche Möglichkeit zur Herstellung von Mehrschichtflaschen aus Rohrabschnitten ist in der Zeitschrift KUNSTSTOFFE Bd. 77, Nr. 7, 1. Juli 1987, MÜNCHEN DE Seiten 669 - 672; K. D. NIESSEN ET AL.: 'Herstellen von Mehrschichtflaschen aus Rohrabschnitten' beschrieben. Auch hier erfolgt eine Formgebung des Mündungsbereiches mit Hilfe einer Außenform sowie durch Einführung eines Dornes, der das Material des Mündungsbereiches in die Profilierung der Außenform verdrängt. Zusätzlich zur mechanischen Materialverdrängung erfolgt eine radiale Expansion des Mündungsbereiches durch Druckluftunterstützung. Die Verformung des Mündungsbereiches erfolgt in einem amorphen Materialzustand. Nach der Durchführung des Formvorganges liegt in gewissem Umfang eine biaxiale Materialorientierung vor. Eine Kristallisierung des Materials wird jedoch nicht vorgenommen.

Der Erfindung liegt die Aufgabe zugrunde, ein Verfahren zum Thermofixieren des Mündungsabschnittes eines Behälters anzugeben, mit dem vorteilhafte Eigenschaften der Behältermündung erzielt werden können.

Die genannte Aufgabe wird erfindungsgemäß dadurch gelöst, daß zur Durchführung des Formvorganges für den Mündungsabschnitt nach der Kristallisation der kristallisierte Mündungsabschnitt von innen nach außen gerichtet sowohl mit einem in Richtung einer Längsachse des Vorformlings eingeführten Dorn als auch mit Druckluft gegen eine Außenform zur Formgebung für die Außenprofilierung gedrückt wird und daß zur Ausbildung einer Innenprofilierung des Mündungsabschnittes der kristallisierte Mündungsabschnitt gestaucht wird.

Gleichzeitig mit der Formung des Mündungsbereiches erfolgt eine Beheizung der Außenform, so daß nach einem ausreichend innigen Kontakt des in die Profilierung der Außenform verdrängten Materials eine Kristallisation durch Wärmeeinwirkung erfolgen kann.

Erfindungsgemäß wird das anschließend zum Mündungsabschnitt umzuformende Ende des Vorformlings thermofixiert. Es wird das Rohrende des Vorformlings auf die Kristallisationstemperatur, nämlich bis nahe an den Schmelzpunkt, erwärmt. In dieser Phase wird eine gewisse Zeitspanne abgewartet, in der die gewünschte Kristallisation stattfindet. Anschließend wird das kristallisierte Mündungsende zu dem gewünschten Mündungsabschnitt, der in der Regel ein Gewinde aufweist, umgeformt. Die hierzu dienende Form wird gekühlt. Auf diese Weise erhält man einen fertigen Vorformling mit maßhaltigen, von der Mündungsform fixierten Abmessungen. Diese Abmessungen müssen funktionsbedingt sehr eng toleriert sein. Erfindungsgemäß ist es vermieden, daß durch die sehr intensive, zur Kristallisation erforderlichen Temperatur das bereits fertig geformte Mündungsende verformt werden kann.

Erfindungsgemäße Weiterbildungen sind in den Unteransprüchen gekennzeichnet. Diese betreffen insbesondere einen Vorformling, mit dem das erfindungsgemäße Verfahren vorteilhaft durchgeführt werden kann. Einerseits kann es sich um einen extrudierten Vorformling handeln. Andererseits wird ein spritzgegossener Vorformling bevorzugt.

So ist nachweisbar, daß ein spritzgegossener Vorformling aus PET eine deutlich niedrigere Viskosität als extrudiertes PET aufweist und außerdem deutlich schneller kristallisiert. Die ist ein erheblicher Vorteil bei der Serienherstellung in einer schnellaufenden Maschine. Ferner gestattet ein Spritzling im Mündungsbereich die Ausbildung einer auf das Formen abgestimmten Wanddicke. So wird in der Regel die Wanddicke im Mündungsbereich kleiner gewählt als die für das Blasen der orientierten Flasche abgestimmte Wanddicke des restlichen Vorformlings. Schließlich lassen sich spritzgegossene Vorformlinge in vergleichsweise einfachen Spritzformen herstellen.

Nach dem Thermofixieren wird der kristallisierte Mündungsabschnitt durch die Ausformung der Innenprofilierung und der Außenprofilierung relativ zu einer Längsachse des Vorformlings gestaucht und dann der Blasformschritt durchgeführt.

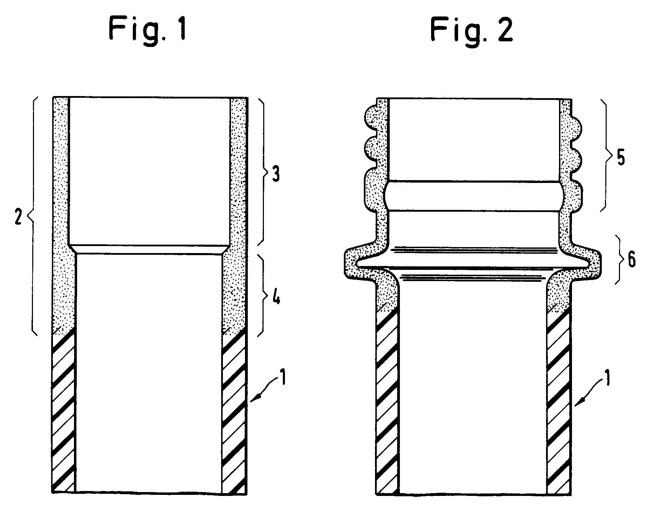

Ein Ausführungsbeispiel der Erfindung ist nachstehend anhand der Zeichnung dargestellt. Fig. 1 zeigt einen Schnitt durch das offene Ende eines spritzgegossenen Vorformlings und Fig. 2 einen Schnitt durch den mit einem Gewinde versehenen Mündungsabschnitt nach dem Kristallisieren und Formen.

In Fig. 1 ist das offene Ende eines Vorformlings (1) dargestellt, der in einer Spritzgießform hergestellt ist. Ein Mündungsabschnitt (2) besteht aus zwei Abschnitten (3) und (4), von denen der Abschnitt (3) eine geringere Wandstärke aufweist.

Der Mündungsabschnitt (2) wird einer Temperaturbehandlung unterzogen, in dem er auf Kristallisationstemperatur nahe dem Schmelzpunkt von PET erwärmt wird, worauf die Kristallisation erfolgt. Im heißen, plastifizierten Zustand wird der Mündungsabschnitt (2) in eine nicht dargestellte Form eingebracht, in der der dünnere Abschnitt (3) in ein Gewinde (5) umgeformt wird, während der dickere Abschnitt (4) zu einem Flansch (6) ausgeformt wird. Für die Umformung ist eine Außenform ausreichend, wenn innen das Material mit einem Dorn und mit Hilfe von Blasluft gegen die Außenform gedrückt wird. Das Gewinde (5) und der Flansch (6) bilden den Mündungsabschnitt (2) des nunmehr fertiggestellten und im Mündungsabschnitt (2) thermofixierten Vorformlings (1). Der thermofixierte Abschnitt, der im Querschnitt punktiert dargestellt ist, muß nicht in den Bereich der großen Wanddicke hineinreichen. Der Vorformling (1) wird anschließend in eine Blasform eingesetzt und in bekannter Weise zum fertigen Behälter unter biaxialer Orientierung aufgeblasen.

## Patentansprüche

1. Verfahren zum Herstellen eines blasgeformten Behälters aus einem thermoplastischen Polyester, insbesondere PET, mit einem zum Aufsetzen eines Verschlusses dienenden, thermofixierten Mündungsabschnitt (2) mit einer Außenprofilierung, der aus dem oberen Ende eines rohrförmigen Vorformlings (1) geformt wird und bei dem das Ende des Vorformlings (1) kristallisiert und dann der Mündungsabschnitt (2) angeformt wird, dadurch gekennzeichnet, daß zur Durchführung des Formvorganges für den Mündungsabschnitt (2) nach der Kristallisation der kristallisierte Mündungsabschnitt (2) von innen nach außen gerichtet sowohl mit einem in Richtung einer Längsachse des Vorformlings (1) eingeführten Dorn als auch mit Druckluft gegen eine Außenform zur Formgebung für die Außenprofilierung gedrückt wird und daß zur Ausbildung einer Innenprofilierung des Mündungsabschnittes (2) der kristallisierte Mündungsabschnitt (2) gestaucht wird.

2. Verfahren nach Anspruch 1, dadurch gekennzeichnet, daß das Ende des Vorformlings (1) auf die Thermofixiertemperatur erwärmt, kristallisiert und hieran anschließend in eine Mündungsform verbracht wird.

3. Verfahren nach Anspruch 2, dadurch gekennzeichnet, daß in der Mündungsform ein Gewinde angeformt wird.

4. Verfahren nach Anspruch 2 oder 3, dadurch gekennzeichnet, daß das Ende in der Form gekühlt wird.

5. Vorformling zur Herstellung eines blasgeformten Behälters aus einem thermoplastischen Polyester, insbesondere PET, mit einem zum Aufsetzen eines Verschlusses dienenden, thermofixierten Mündungsabschnitt (2), der eine Außenprofilierung aufweist, und bei dem die Außenprofilierung des Mündungsabschnittes (2) nach einer Kristallisation geformt ist, dadurch gekennzeichnet, daß der Mündungsabschnitt (2) im Bereich einer der Außenprofilierung abgewandt angeordneten Innenseite mit einer Innenprofilierung versehen ist und daß der kristallisierte Mündungsabschnitt (2) durch die Ausformung der Innenprofilierung und der Außenprofilierung relativ zu einer Längsachse des Vorformlings (1) gestaucht ist.

6. Vorformling Anspruch 5, dadurch gekennzeichnet, daß der Vorformling (1) ein extrudierter Rohrabschnitt ist.

7. Vorformling nach Anspruch 5, dadurch gekennzeichnet, daß der Vorformling (1) spritzgegossen ist.

8. Vorformling nach einem der Ansprüche 5 bis 7, dadurch gekennzeichnet, daß die Wanddicke des den Mündungsabschnitt (2) bildenden Endes des Vorformlings (1) auf das Anformen des Mündungsabschnittes (2) abgestimmt ist.

9. Vorformling nach einem der Ansprüche 5 bis 8, dadurch gekennzeichnet, daß der Mündungsabschnitt (2) im Bereich eines der Mündungsöffnung zugewandten Abschnittes (3) eine geringere Dicke als in einem der Mündungsöffnung abgewandt angeordneten Abschnitt (4) aufweist und daß der Abschnitt (4) zur Formung eines einen Stützring ausbildenden Flansches (6) vorgesehen ist.

10. Vorformling nach einem der Ansprüche 5 bis 9, dadurch gekennzeichnet, daß der im Bereich des Flansches (6) ausgebildete Stützring im Bereich seiner einem Innenraum des Vorformlings (1) zugewandten Ausdehnung hohl ausgebildet ist.

## Claims

1. A method of producing a blow moulded container from a thermoplastic polyester, particularly PET, with a heat set mouth section (2), serving for the positioning of a closure, with an outer contour which is moulded from the upper end of a tube-shaped parison (1) and in which the end of the parison (1) is crystallised and then moulded onto the mouth section (2), characterised in that, in order to carry out the moulding process for the mouth section (2), after crystallisation the crystallised mouth section (2) is pressed, directed from the inside to the outside, both with a mandrel introduced in the direction of a longitudinal axis of the parison (1) and with compressed air, against an outer mould in order to give shape to the outer contour, and that the crystallised mouth section (2) is compressed in order to form an inner contour of the mouth section (2).

2. A method according to claim 1, characterised in that the end of the parison (1) is heated to the heat setting temperature, crystallised and then immediately placed into a mouth mould.

3. A method according to claim 2, characterised in that a thread is moulded on in the mouth mould.

4. A method according to claim 2 or 3, characterised in that the end is cooled in the mould.

5. A parison for producing a blow moulded container from a thermoplastic polyester, particularly PET, with a heat set mouth section (2), serving for the positioning of a closure, which has an outer contour, and in which the outer contour of the mouth section (2) is moulded after crystallisation, characterised in that, in the region of an inner side arranged facing away from the outer contour, the mouth section (2) is provided with an inner profile and that the crystallised mouth section (2) is compressed by the extrusion of the inner contour and of the outer contour relative to a longitudinal axis of the parison (1).

6. A parison according to claim 5, characterised in that the parison (1) is an extruded tube section.

7. A parison according to claim 5, characterised in that the parison (1) is injection moulded.

8. A parison according to one of claims 5 to 7, characterised in that the wall thickness of the end of the parison (1) forming the mouth section (2) is matched to the moulding on of the mouth section (2).

9. A parison according to one of claims 5 to 8, characterised in that the mouth section (2), in the region of a section (3) facing the mouth opening, is of lower thickness than in a section (4) arranged facing away from the mouth opening and that the section (4) is provided for moulding a flange (6) forming a supporting ring.

10. A parison according to one of claims 5 to 9, characterised in that the supporting ring produced in the region of the flange (6) is hollow in the region of its extension facing an inner space of the parison (1).

## Revendications

1. Procédé pour fabriquer un récipient moulé par soufflage en polyester thermoplastique, en particulier en PET, ce récipient comportant une embouchure (2) fixée (stabilisée) à chaud, prévue pour recevoir un organe d'obturation et présentant un profil extérieur obtenu par formage de l'extrémité supérieure d'une ébauche de moulage (1) de forme tubulaire, ce procédé consistant à cristalliser l'extrémité de l'ébauche de moulage (1) et à mettre ensuite en forme la partie servant d'embouchure (2), caractérisé en ce que pour effectuer cette opération de formage de la partie qui sert d'embouchure (2) après sa cristallisation, on applique un effet de pression de l'intérieur vers l'extérieur sur cette partie cristallisée qui sert d'embouchure (2), à la fois au moyen d'un mandrin introduit dans le sens d un axe longitudinal de l'ébauche de moulage (1) et aussi au moyen d'air comprimé, pour assurer le profilage extérieur de cette partie en l'appliquant contre un moule extérieur afin de lui donner la forme voulue, et en ce qu'on refoule la partie cristallisée qui sert d'embouchure (2) pour assurer un profilage interne de cette partie qui sert d'embouchure (2).

2. Procédé selon la revendication 1, caractérisé en ce qu'on chauffe l'extrémité de l'ébauche de formage (1) jusqu'à la température de fixage à chaud, pour assurer la cristallisation de cette partie que l'on place ensuite dans un moule prévu pour mettre en forme l'embouchure.

3. Procédé selon la revendication 2, caractérisé en ce qu'on réalise un filetage dans le moule prévu pour l'embouchure.

4. Procédé selon la revendication 2 ou 3, caractérisé en ce qu'on refroidit l'extrémité dans le moule.

5. Ebauche de moulage pour réaliser un récipient moulé par soufflage en polyester thermoplastique, en particulier en PET, cette ébauche comportant une partie fixée (stabilisée) à chaud qui sert d'embouchure (2), qui est prévue pour recevoir un organe d'obturation et qui présente un profil externe obtenu par profilage de la partie qui sert d'embouchure (2), après cristallisation, caractérisée en ce que la partie qui sert d'embouchure (2) est pourvue d'un profil interne à l'endroit d'une face interne située à l'opposé du profil externe, et en ce que le formage du profil interne et du profil externe est obtenu par refoulement de la partie cristallisée (2) qui sert d'embouchure par rapport à un axe longitudinal de l'ébauche de moulage (1).

6. Ebauche de moulage selon la revendication 5, caractérisée en ce que l'ébauche de moulage (1) est un tronçon de tube extrudé.

7. Ebauche de moulage selon la revendication 5, caractérisée en ce que l'ébauche de moulage (1) est moulée par injection.

8. Ebauche de moulage selon l'une des revendications 5 à 7, caractérisée en ce que l'épaisseur de la paroi de l'extrémité de l'ébauche de moulage (1) qui constitue la partie destinée à servir d'embouchure (2) est prévue pour convenir à la mise en forme de la partie qui sert d'embouchure (2).

9. Ebauche de moulage selon l'une des revendications 5 à 8, caractérisée en ce que la partie qui sert d'embouchure (2) présente, à l'endroit d'une partie (3) adjacente à l'orifice de l'embouchure, une épaisseur plus faible qu'à l'endroit d'une partie (4) opposée à l'orifice de l'embouchure, et en ce que cette partie (4) est prévue pour produire une collerette (6) qui sert de butée annulaire d'appui.

10. Ebauche de moulage selon l'une des revendications 5 à 9, caractérisée en ce que la butée annulaire réalisée à l'endroit de la collerette (6) présente un profil creux à l'endroit de son extension située en regard d'un volume interne de l'ébauche de moulage (1).
